# EUROPEAN PATENT APPLICATION

(11) **EP 4 112 760 A1**
(43) Date of publication of application: **04.01.2023**
(21) Application number: 21760224.2
(22) Date of filing: 15.02.2021
(51) Int. Cl.: C22C 19/05, C22C 38/00, C22C 38/04, B23K 35/30, B23K 35/368

(54) **NI-BASED ALLOY FLUX-CORED WIRE**

(30) Priority: 28.02.2020 JP 2020034276
(71) Applicant: KABUSHIKI KAISHA KOBE SEIKO SHO (KOBE STEEL, LTD.), Hyogo 651-8585 (JP)
(72) Inventor: KAWATA, Junichi, Fujisawa-shi, Kanagawa 251-8551 (JP); KITAGAWA, Yoshihiko, Fujisawa-shi, Kanagawa 251-8551 (JP)
(74) Representative: Müller-Boré & Partner Patentanwälte PartG mbB
(86) International application number: PCT/JP2021/005574
(87) International publication number: WO 2021/172079

(57) **Abstract**

To obtain a Ni-based alloy flux-cored wire that has exceptional high-temperature cracking resistance and weldability in a vertical orientation, and makes it possible to reduce the occurrence of slag seizure and pitting of the bead surface. A Ni-based alloy flux-cored wire obtained by filling an outer coat formed from a Ni-based alloy with flux, the Ni-based alloy flux-cored wire containing Mn, Ni, Cr, Mo, W, and Fe each in prescribed quantities with respect to the total mass of the wire. The flux contains 5.40-10.00 mass% of TiO₂, 0.40-3.00 mass% of Si metal and Si oxide in terms of SiO₂, 2.70 mass% or less of Zr metal and Zr oxide in terms of ZrO₂, and 0.05-1.20 mass% of Al₂O₃ with respect to the total mass of the wire. The MnO₂ content is less than 0.80 mass%, the Bi₂O₃ content is 0.01 mass% or less, and ([TiO₂] + [ZrO₂])/([SiO₂] + [Al₂O₃]) is 25.00 or less.

## Description

### Technical Field

The present invention relates to a Ni-based alloy flux-cored wire.

### Background Art

Gas shielded arc welding using a flux-cored wire is more efficient than shielded metal arc welding and TIG welding, and in various fields, shielded metal arc welding and TIG welding are being replaced with welding using a flux-cored wire. Accordingly, Ni-based alloy flux-cored wires are being developed and improved also in gas shielded arc welding of base metals such as various Ni-based alloys typified by Inconel (registered trademark), Hastelloy (registered trademark), and the like, low-temperature service steels such as 9% Ni steel, and super stainless steel. Examples of properties that the Ni-based alloy flux-cored wires used to weld these welding workpieces are required to have include not only providing weld metals having good mechanical properties but also having high welding workability.

In particular, Ni-based alloys, as compared to other alloys (mild steels and stainless steels), have low solidification temperature and are characterized in that a molten pool tends to sag during welding in a vertical position. Other characteristics of Ni-based alloys include the tendency to undergo hot cracking. For example, PTL 1 has proposed a Ni-based alloy flux-cored wire whose weld metal performance such as welding workability, ductility, toughness, and cracking resistance has been improved by appropriately controlling the flux filling ratio of the wire and the contents of slag components and metal components.

As opposed to the Ni-based alloy flux-cored wire disclosed in PTL 1, PTL 2 has proposed a Ni-based alloy flux-cored wire that can suppress the occurrence of bead surface pit during horizontal fillet welding or horizontal welding.

When the flux-cored wire disclosed in PTL 2 is used, arc stability during welding may deteriorate or hot cracking resistance may decrease depending on the composition, and to improve this, PTL 3 has disclosed a Ni-based alloy flux-cored wire in which flux components are appropriately controlled and also in which the ratios of the TiO₂ content and the ZrO₂ content to the SiO₂ content are defined. PTL 3 also states that high welding workability and weld metal properties are provided when vertical upward welding is performed using the Ni-based alloy flux-cored wire and an Ar-20% CO₂ gas as a shielding gas.

### Citation List

### Patent Literature

PTL 1: Japanese Unexamined Patent Application Publication No. 6-198488
PTL 2: Japanese Unexamined Patent Application Publication No. 2008-246507
PTL 3: Japanese Unexamined Patent Application Publication No. 2011-140064

### Summary of Invention

### Technical Problem

However, when vertical upward welding is performed in a 100% CO₂ atmosphere using the Ni-based alloy flux-cored wire disclosed in PTL 3, there is a problem in that a weld bead tends to sag. This is presumably because the amount of oxygen in the weld metal changes as the shielding gas is changed from Ar-20% CO₂ to 100% CO₂, thus resulting in changes in solidification temperature, viscosity, and the like of a molten pool and because the change of the shielding gas causes, for example, arc constriction, thus resulting in changes in the amount of heat given to the molten pool and the flow rate of plasma airflow.

In the welding of an LNG fuel tank for which 9% Ni steel or the like is used or a scrubber for which super stainless steel or the like is used, 100% CO₂ is often used as a shielding gas. In addition, the performance required varies depending on the intended use of the structure. For example, the LNG fuel tank is required to have high toughness at cryogenic temperatures, and the scrubber is required to have high corrosion resistance; thus, a Ni-based alloy flux-cored wire containing a Hastelloy-type alloy component is desired as a weld material for use.

The present invention has been made in view of the foregoing circumstances, and an object thereof is to provide a Ni-based alloy flux-cored wire that has good welding workability in a vertical position even in a 100% CO₂ shielding gas atmosphere, that can reduce the occurrence of slag seizure and bead surface pit, and that can provide a weld metal having high hot cracking resistance.

### Solution to Problem

The above object of the present invention is achieved by the following configuration [1] related to a Ni-based alloy flux-cored wire.
[1] A Ni-based alloy flux-cored wire including a sheath filled with a flux, the sheath being formed of a Ni-based alloy with, wherein
   the wire contains, relative to a total mass of the wire,
   Mn: 0.1 mass% or more and 5 mass% or less,
   Ni: 40 mass% or more and 60 mass% or less,
   Cr: 5 mass% or more and 20 mass% or less,
   Mo: 10 mass% or more and 20 mass% or less,
   W: 2.0 mass% or more and 4.0 mass% or less, and
   Fe: 3.0 mass% or more and 7.0 mass% or less,
   the flux contains, relative to the total mass of the wire,
   TiO₂: 5.40 mass% or more and 10.00 mass% or less,
   metallic Si and Si oxide in terms of SiO₂: 0.40 mass% or more and 3.00 mass% or less,
   metallic Zr and Zr oxide in terms of ZrO₂: 2.70 mass% or less, and
   Al₂O₃: 0.05 mass% or more and 1.20 mass% or less, and
   MnO₂: less than 0.80 mass%,
   Bi₂O₃: 0.01 mass% or less, and
   ([TiO₂] + [ZrO₂])/([SiO₂] + [Al₂O₃]): 25.00 or less,
   where [TiO₂] is a content of TiO₂, [SiO₂] is a content in terms of SiO₂, [ZrO₂] is a content in terms of ZrO₂, and [Al₂O₃] is a content of Al₂O₃, are satisfied.
   The Ni-based alloy flux-cored wire according to preferred embodiments of the present invention relates to [2] to [4] below.
[2] The Ni-based alloy flux-cored wire according to [1], wherein
   the flux further contains at least one selected from Na, K, and Li, and
   [Na] + [K] + [Li]: 0.10 mass% or more and 0.70 mass% or less,
   where [Na], [K], and [Li] are a content of Na, a content of K, and a content of Li, respectively, relative to the total mass of the wire, is satisfied.
[3] The Ni-based alloy flux-cored wire according to [1] or [2], wherein
   the flux further contains, relative to the total mass of the wire,
   metal fluoride in terms of F: 0.05 mass% or more and 0.50 mass% or less, and
   metallic B and B compound in terms of B: 0.030 mass% or less, is satisfied.
[4] The Ni-based alloy flux-cored wire according to any one of [1] to [3], wherein relative to the total mass of the wire,
   Ti: 0.50 mass% or less, is further satisfied.

### Advantageous Effects of Invention

The present invention can provide a Ni-based alloy flux-cored wire that has good welding workability in a vertical position even in a 100% CO₂ shielding gas atmosphere, that has high arc stability, that can reduce the occurrence of slag seizure and bead surface pit, and that can provide a weld metal having high hot cracking resistance.

### Brief Description of Drawings

[Fig. 1] Fig. 1 is a schematic view showing a welding method for evaluating vertical welding workability.
[Fig. 2] Fig. 2 is a schematic view showing welding conditions for evaluating hot cracking resistance.
[Fig. 3A] Fig. 3A is a schematic view showing a welding method for evaluating slag seizure.
[Fig. 3B] Fig. 3B is a side view of Fig. 3A.
[Fig. 3C] Fig. 3C is a top view of Fig. 3A.

### Description of Embodiments

Hereinafter, embodiments of the present invention will be described in detail. It should be noted that the present invention is not limited to the embodiments described below, and various changes can be made without departing from the gist of the present invention.

The present inventors have conducted intensive studies to solve the above problems and found that when the composition of flux components in a Ni-based alloy flux-cored wire is controlled within a specific range, sagging of a molten pool does not occur during vertical upward welding, good welding workability and high arc stability are provided, the occurrence of slag seizure and bead surface pit can be reduced, and a weld metal having high hot cracking resistance can be provided.

Hereinafter, a Ni-based alloy flux-cored wire according to an embodiment will be described.

### [Flux-cored wire]

The flux-cored wire according to this embodiment includes a sheath filled with a flux, the sheath being formed of a Ni-based alloy. Specifically, the flux-cored wire according to this embodiment is constituted by a tubular Ni-based alloy sheath and a flux filled in (inside) the sheath. The flux-cored wire may be of seamless type having no seam in the sheath or of seam type tubularly formed so as to have a C-shaped section, a folded section, or the like and having a seam in the sheath.

The Ni-based alloy flux-cored wire according to this embodiment is intended to be, particularly, a wire designed to provide a weld metal having a Hastelloy-type composition.

Next, regarding components contained in the flux and the sheath of the Ni-based alloy flux-cored wire according to this embodiment, the reasons for their addition and numerical limitation will be described in detail. Unless otherwise specified in the following description, the amount of each component in the flux-cored wire is defined as a value obtained by converting the total amount of the component contained in the sheath formed of a Ni-based alloy and in the flux into a content relative to the total mass of the wire (the total amount of the sheath and the flux in the sheath).

### <Flux filling ratio: 20 mass% or more and 30 mass% or less>

The flux contains metals, alloys, and, in addition, compounds such as oxides and fluorides. If the flux content relative to the total mass of the wire, that is, the flux filling ratio, is less than 20 mass%, the wall thickness of the steel sheath of the wire becomes excessively large, thus leading to the formation of an enlarged droplet at the tip of the wire during welding, and hence poor droplet transfer to a molten pool. As a result, in welding in vertical, horizontal, and overhead positions, sagging of a weld metal and slag occurs to reduce welding workability. Therefore, the flux filling ratio is preferably 20 mass% or more. If the flux filling ratio exceeds 30 mass%, the characteristic of moisture absorption will be poor, thus leading to poor blow-hole resistance. Therefore, the flux filling ratio is preferably 30 mass% or less.

First, the reasons for inclusion and numerical limitation of the components contained in the flux will be described.

### <TiO₂: 5.40 mass% or more and 10.00 mass% or less>

TiO₂ is a component that forms a uniform and well-covering slag and helps improve arc stability, and thus is added as a principal component of a slag-forming agent. In addition, TiO₂, which is an oxide having a high melting point, can improve welding workability in a vertical position when contained in the flux.

If the TiO₂ content is less than 5.40 mass%, the characteristics as the slag-forming agent cannot be fully exhibited, and a bead tends to sag in vertical upward welding. Therefore, the TiO₂ content in the flux is 5.40 mass% or more relative to the total mass of the wire, and is preferably 5.50 mass% or more.

If the TiO₂ content exceeds 10.00 mass%, the amount of slag components in the wire becomes excessive, and the amount of slag formed during welding becomes excessive, so that the slag tends to sag down from a weld zone. In addition, slag inclusion tends to occur, and pit resistance decreases. Therefore, the TiO₂ content in the flux is 10.00 mass% or less relative to the total mass of the wire, and is preferably 9.80 mass% or less.

When the TiO₂ content in the flux is in the above more preferred range, sagging of a weld bead can be prevented more effectively during vertical upward welding.

### <Metallic Si and Si oxide in terms of SiO₂: 0.40 mass% or more and 3.00 mass% or less>

Metallic Si and Si oxide, as with TiO₂, are components that can increase the viscosity of slag, and are added as slag-forming agents in order to provide a good bead shape.

If the content in terms of SiO₂ is less than 0.40 mass%, the above effect of the slag-forming agents cannot be sufficiently produced, thus leading to low welding workability in a vertical position. Therefore, the content in terms of SiO₂ in the flux is 0.40 mass% or more relative to the total mass of the wire, and is preferably 0.90 mass% or more, more preferably 1.80 mass% or more.

If the content in terms of SiO₂ exceeds 3.00 mass%, slag seizure properties decrease. Therefore, the content in terms of SiO₂ in the flux is 3.00 mass% or less relative to the total mass of the wire, and is preferably 2.90 mass% or less.

When the content in terms of SiO₂ in the flux is in the above more preferred range, sagging of a weld bead can be prevented more effectively during vertical upward welding, and better slag seizure properties can be obtained.

The content of metallic Si and Si oxide in terms of SiO₂ refers to a total amount of elemental Si, Si alloys, and Si oxides contained in the flux as expressed in terms of SiO₂.

### <Metallic Zr and Zr oxide in terms of ZrO₂: 2.70 mass% or less>

Metallic Zr and Zr oxide are components having the effects of improving arc blowability and improving arc stability also in a low current range. In addition, metallic Zr and Zr oxide also have the effect of accelerating the solidification of slag to improve welding workability in vertical upward welding.

However, if the content in terms of ZrO₂ exceeds 2.70 mass%, the solidification temperature of slag becomes high, so that slag solidifies rapidly; thus, gas generated from a solidifying weld metal cannot be discharged through a solidifying slag, and pit tends to occur in a weld zone. Therefore, the content in terms of ZrO₂ in the flux is 2.70 mass% or less relative to the total mass of the wire, and is preferably 2.20 mass% or less, more preferably 1.30 mass% or less, particularly preferably 0.50 mass% or less.

When the content in terms of ZrO₂ in the flux is in the above more preferred range, sagging of a weld bead can be prevented more effectively during vertical upward welding, and higher pit resistance and arc stability can be obtained.

The content of metallic Zr and Zr oxide in terms of ZrO₂ refers to a total amount of metallic Zr, Zr alloys, and Zr oxides contained in the flux as expressed in terms of ZrO₂.

### <Al₂O₃: 0.05 mass% or more and 1.20 mass% or less>

Al₂O₃, as with TiO₂ and others, is a slag-forming agent and has the effect of adjusting the shape of a bead to improve the conformability to a base metal. In addition, Al₂O₃ is a component effective in adjusting slag viscosity and has the effect of preventing bead sagging during vertical upward welding. To produce these effects, Al₂O₃ needs to be added in an amount of 0.05 mass% or more, preferably in an amount of 0.06 mass% or more. However, if the content in terms of Al₂O₃ exceeds 1.20 mass%, the slag viscosity becomes excessively high, thus increasing the likelihood of slag inclusion and reducing slag removability. Therefore, the Al₂O₃ content in the flux is 1.20 mass% or less, preferably 1.10 mass% or less, more preferably 1.00 mass% or less.

### <([TiO₂] + [ZrO₂])/([SiO₂] + [Al₂O₃]): 25.00 or less>

SiO₂ and Al₂O₃ are components that increase the viscosity of slag to give a good bead shape, as described above.

However, if the ratio of the sum of the TiO₂ content and the content in terms of ZrO₂ to the sum of the content in terms of SiO₂ and the Al₂O₃ content ([TiO₂] + [ZrO₂])/([SiO₂] + [Al₂O₃]), where [TiO₂] is the content of TiO₂ in the flux, [ZrO₂] is the content in terms of ZrO₂ in the flux, [SiO₂] is the content in terms of SiO₂ in the flux, and [Al₂O₃] is the content of Al₂O₃ in the flux, exceeds 25.00, the fluidity of slag decreases, uniform slag is less easily formed to increase the likelihood of slag inclusion, and the conformability of a bead also decreases. In addition, the temperature at which slag begins to solidify becomes high to retard the solidification of slag, and gas generated from a solidifying weld metal cannot be discharged through a solidifying slag, thus increasing the number of pits occurring in a weld zone. Therefore, {([TiO₂] + [ZrO₂])/([SiO₂] + [Al₂O₃])} is 25.00 or less, and is preferably 20.00 or less, more preferably 15.00 or less, still more preferably 10.00 or less, particularly preferably 6.00 or less, further preferably 3.00 or less.

### <MnO₂: less than 0.80 mass% (including 0 mass%)>

MnO₂ is a component that has a low melting point and decreases the solidification temperature of molten slag by being added into the flux.

If the MnO₂ content is 0.80 mass% or more, a bead tends to sag during vertical welding. Therefore, the MnO₂ content in the flux is less than 0.80 mass% relative to the total mass of the wire, and is preferably less than 0.50 mass%, more preferably less than 0.30 mass%.

### <Bi₂O₃: 0.01 mass% or less (including 0 mass%)>

Bi₂O₃ is a component having the effect of preventing slag seizure, and thus a very small amount Bi₂O₃ may be added into the flux in the case of, for example, a flux-cored wire for stainless steel. However, Bi is also a component that greatly reduces hot cracking resistance. Therefore, Bi₂O₃ is substantially not added into the flux in this embodiment. That is, Bi₂O₃ in the flux is preferably 0.01 mass% or less relative to the total mass of the wire, more preferably less than 0.005 mass%, that is, substantially absent.

### <[Na] + [K] + [Li]: 0.10 mass% or more and 0.70 mass% or less>

The flux of the Ni-based alloy flux-cored wire according to this embodiment preferably further contains at least one selected from Na, K, and Li. Basic compounds in the flux, such as Na, K, and Li, are components that act as arc stabilizers and have the effect of, for example, suppressing spattering.

Here, when {[Na] + [K] + [Li]} is 0.10 mass% or more, where [Na], [K], and [Li] are the content of Na, the content of K, and the content of Li, respectively, relative to the total mass of the wire, the effect of the arc stabilizers can be sufficiently produced. Therefore, when the flux further contains at least one selected from Na, K, and Li, {[Na] + [K] + [Li]} is preferably 0.10 mass% or more, more preferably 0.15 mass% or more, still more preferably 0.20 mass% or more.

When {[Na] + [K] + [Li]} is 0.70 mass% or less, arc stability improves, and the amount of spattering can be reduced. Therefore, {[Na] + [K] + [Li]} is preferably 0.70 mass% or less, more preferably 0.60 mass% or less.

### <Metal fluoride in flux: 0.05 mass% or more and 0.50 mass% or less in terms of F relative to total mass of wire>

Metal fluorides have the effects of improving arc stability and improving the fluidity of slag. Metal fluoride sources include LiF, NaF, Na₃AlF₆, and K₂SiF₆. When a metal fluoride is contained in an amount of 0.05 mass% or more in terms of F relative to the total mass of the wire, the above effects can be sufficiently produced, and arc stability improves. Therefore, when the flux contains a metal fluoride in the wire of this embodiment, the content thereof in terms of F is preferably 0.05 mass% or more, more preferably 0.06 mass% or more. When a metal fluoride is contained in an amount of 0.50 mass% or less in terms of F relative to the total mass of the wire, the viscosity of slag can be appropriately maintained, and the occurrence of sagging of a molten pool in a vertical position can be suppressed. Therefore, in the wire of this embodiment, the metal fluoride content in terms of F is preferably 0.50 mass% or less, more preferably 0.45 mass% or less.

### <Metallic B and B compound in terms of B: 0.030 mass% or less (including 0 mass%)>

When the content of metallic B and B compound in terms of B is 0.030 mass% or less relative to the total mass of the wire, the occurrence of hot cracking can be prevented. Therefore, in the wire of this embodiment, the content of metallic B and B compound in terms of B is preferably 0.030 mass% or less, more preferably 0.020 mass% or less.

The metallic B and B compound can be added to the flux, and the content in terms of B refers to a total amount of elemental B, B alloys, and B compounds contained in the flux as expressed in terms of B. Examples of B compounds include oxides such as B₂O₃, and examples of B alloys include Fe-B alloys.

### <Ti: 0.50 mass% or less (including 0 mass%)>

Ti serves as a deoxidation component to reduce the amount of dissolved oxygen in a molten metal, inhibit the reaction of "C + O = CO (gas)", and reduce the amount of blowhole formation, but an excessive addition of Ti reduces hot cracking resistance. When the Ti content is 0.50 mass% or less (including 0 mass%) relative to the total mass of the wire, the amount of blowhole formation can be reduced, and high hot cracking resistance can be maintained. Therefore, in the wire of this embodiment, Ti in the flux is preferably 0.50 mass% or less, more preferably 0.40 mass% or less, still more preferably 0.30 mass% or less. Ti sources include metallic Ti and Ti alloys (e.g., Fe-Ti), and in this embodiment, the Ti content is defined as a content of these Ti sources expressed in terms of Ti. However, this Ti content is a content of Ti derived from metallic Ti and Ti alloys soluble in sulfuric acid and does not include a content of Ti derived from oxides such as TiO₂ insoluble in sulfuric acid. While metallic Ti and Ti alloys can be added to the flux, Ti may be added from a hoop.

Next, the reasons for addition and numerical limitation of alloy components added from the sheath and the flux of the Ni-based alloy flux-cored wire will be described.

Each metal component is contained in the wire in the form of an elemental metal or alloy.

### <Mn: 0.1 mass% or more and 5 mass% or less>

Mn is a γ-phase-forming element and is an element effective in matrix strengthening.

If the Mn content is less than 0.1 mass%, the above effect cannot be produced. In addition, a weld metal having a desired Mn content cannot be provided. Therefore, the Mn content in the sheath and the flux is 0.1 mass% or more relative to the total mass of the wire.

If the Mn content exceeds 5 mass%, a decrease in slag removability may be caused, and a weld metal having a desired Ni content cannot be provided. Therefore, the Mn content in the sheath and the flux is 5 mass% or less relative to the total mass of the wire.

### <Ni: 40 mass% or more and 60 mass% or less>

Ni is the main component constituting a matrix in a weld metal formed of the Ni-based alloy. Ni is also a component having the effects of ensuring the toughness and ductility of the weld metal and ensuring corrosion resistance.

If the Ni content is less than 40 mass%, the above effects cannot be produced, and a weld metal having a desired Ni content cannot be provided. Therefore, the Ni content in the sheath and the flux is 40 mass% or more relative to the total mass of the wire.

If the Ni content exceeds 60 mass%, a weld metal having a desired Ni content cannot be provided. Therefore, the Ni content in the sheath and the flux is 60 mass% or less relative to the total mass of the wire.

### <Cr: 5 mass% or more and 20 mass% or less>

Cr is a component necessary for improving corrosion resistance to oxidizing acids.

If the Cr content is less than 5 mass%, the above effect cannot be produced, and a weld metal having a desired Cr content cannot be provided. Therefore, the Cr content in the sheath and the flux is 5 mass% or more relative to the total mass of the wire. The Cr content is preferably 8 mass% or more, more preferably 12 mass% or more.

If the Cr content exceeds 20 mass%, Cr carbonitride may be precipitated to thereby provide a weld metal with low mechanical properties. In addition, a weld metal having a desired Cr content cannot be provided. Therefore, the Cr content in the sheath and the flux is 20 mass% or less relative to the total mass of the wire.

### <Mo: 10 mass% or more and 20 mass% or less>

Mo, when present in the wire together with Cr, can ensure high corrosion resistance not only to oxidizing acids but also to non-oxidizing acids and salts.

If the Mo content is less than 10 mass%, the above effect cannot be produced, and a weld metal having a desired Mo content cannot be provided. Therefore, the Mo content in the sheath and the flux is 10 mass% or more relative to the total mass of the wire.

If the Mo content exceeds 20 mass%, an intermetallic compound of Mo and Ni may be markedly precipitated to provide a weld metal with low mechanical properties. In addition, a weld metal having a desired Mo content cannot be provided. Therefore, the Mo content in the sheath and the flux is 20 mass% or less relative to the total mass of the wire.

### <W: 2.0 mass% or more and 4.0 mass% or less>

W, when added from the wire to a weld metal, can produce the effect of stabilizing the γ phase due to a solid solution strengthening effect to improve the tensile strength of the weld metal.

If the W content is less than 2.0 mass%, the above effect cannot be produced, and a weld metal having a desired W content cannot be provided. Therefore, the W content in the sheath and the flux is 2.0 mass% or more relative to the total mass of the wire.

If the W content exceeds 4.0 mass%, segregation of W may occur to provide a weld metal with low toughness. In addition, a weld metal having a desired W content cannot be provided. Therefore, the W content in the sheath and the flux is 4.0 mass% or less relative to the total mass of the wire.

### <Fe: 3.0 mass% or more and 7.0 mass% or less>

Fe, when dissolved in the Ni-based alloy, can produce the effect of improving the tensile strength of a weld metal.

If the Fe content is less than 3.0 mass%, the above effect cannot be produced, and a weld metal having a desired Fe content cannot be provided. Therefore, the Fe content in the sheath and the flux is 3.0 mass% or more relative to the total mass of the wire.

If the Fe content exceeds 7.0 mass%, Fe may be precipitated in the form of a low-melting-point Laves phase at a grain boundary and melted again upon reheating in multi-pass welding to cause reheat liquation cracking of the grain boundary. In addition, a weld metal having a desired Fe content cannot be provided. Therefore, the Fe content in the sheath and the flux is 7.0 mass% or less relative to the total mass of the wire.

In the flux-cored wire according to this embodiment, the sum of the above-described components whose contents have been defined (excluding the sum of [Na] + [K] + [Li], the content in terms of F, the content in terms of B, and Ti described above) is preferably 90 mass% or more, more preferably 95 mass% or more, still more preferably 98 mass% or more, relative to the total mass of the wire.

### <Other components and unavoidable impurities>

The Ni-based alloy flux-cored wire according to this embodiment contains, in addition to the above-described components, other components such as C and metallic Si and Cu in the sheath. Among these components, preferably, C is regulated to be 0.10 mass% or less, metallic Si in the sheath to be 1.0 mass% or less, and Cu to be 0.5 mass% or less. In addition, unavoidable impurities such as P, S, and water are contained. Among these unavoidable impurities, P is preferably regulated to be 0.010 mass% or less, S is preferably regulated to be 0.010 mass% or less, and water is preferably regulated to be 0.010 mass% or less.

### <Sheath thickness, wire size, and shielding gas composition>

The Ni-based alloy flux-cored wire according to this embodiment may have any sheath thickness and any wire size (diameter), and can be applied to wires having diameters specified in a welding material standard such as AWS or JIS, for example, 0.8 mm, 0.9 mm, 1.0 mm, 1.2 mm, 1.4 mm, and 1.6 mm.

Furthermore, although 100% CO₂ can be suitably used as the shielding gas composition, the effects of this embodiment can be produced also by using a gas mixture of Ar and CO₂.

### [Method of producing flux-cored wire]

The method of producing the flux-cored wire according to this embodiment is not particularly limited, and, for example, the flux-cored wire can be produced by a method described below.

First, a steel strip to constitute a steel sheath is provided, and the steel strip, while being fed in the longitudinal direction, is formed into a U-shaped open tube with a forming roll. Next, the steel sheath is filled with a flux composed of ingredients combined so as to provide a predetermined component composition, and then processed so as to have a circular section. The resultant is then cold-drawn to provide a flux-cored wire having a wire size of, for example, 1.2 to 2.4 mm.

Annealing may be performed during the process of cold-drawing. Either a seamless wire having a structure in which the seam of the steel sheath formed during the production process is welded or a wire having a structure in which the seam is not welded and is left as a gap may be employed.

### EXAMPLES

The present invention will now be described in more detail with reference to Inventive Examples and Comparative Examples, but the present invention is not limited thereto.

### [Production of flux-cored wire]

First, a metal strip having a thickness of 0.4 mm and a width of 9.0 mm and formed of a Ni-based alloy was bent to produce a sheath. The sheath was filled with a flux composed of metal ingredients and slag components and then drawn to a diameter of 1.2 mm to produce a flux-cored wire. The contents of the components contained in the sheath and the flux are shown in Table 1 (Inventive Examples) and Table 2 (Comparative Examples) below.

The contents of the components shown in Table 1 and Table 2 are contents (mass%) relative to the total mass of the wire. The balance is composed of C, metallic Si and Cu, and unavoidable impurities. Furthermore, "([TiO₂] + [ZrO₂])/([SiO₂] + [Al₂O₃])" shown in Table 1 and Table 2 indicates the ratio of the sum of the TiO₂ content and the content in terms of ZrO₂ to the sum of the content in terms of SiO₂ and the Al₂O₃ content. "[Na] + [K] + [Li]" indicates the sum of the Na content, the K content, and the Li content in the flux relative to the total mass of the wire. Ti in the flux represents a Ti content derived from metallic Ti and Ti alloys other than Ti oxides.

In Table 1 and Table 2, the expression "-" in the column of each component means that the content of the component is less than 0.005 mass%.

**[Table 1]**

| | Wire No. | Content (mass%) of components contained in flux in wire | | | | | | | | | | Content (mass%) of components in wire | | | | | | |
|---|---|---|---|---|---|---|---|---|---|---|---|---|---|---|---|---|---|---|
| | | TiO₂ | Content in terms of SiO₂ | Content in terms of ZrO₂ | Al₂O₃ | ([TiO₂] + [ZrO₂])/([SiO₂] + [Al₂O₃]) | [Na] + [K] + [Li] | Content in terms ofF | MnO₂ | Content in terms of B | Bi₂O₃ | Mn | Ni | Cr | Mo | w | Fe | Ti |
| Inventive Example | 1 | 6.52 | 2.77 | 0.04 | 0.73 | 1.88 | 0.36 | 0.13 | - | 0.009 | - | 0.4 | 51 | 16 | 13 | 3.1 | 5.0 | 0.11 |
| | 2 | 6.60 | 2.70 | 0.04 | 0.73 | 1.93 | 0.33 | 0.13 | - | 0.000 | - | 0.4 | 51 | 16 | 13 | 3.1 | 5.0 | 0.11 |
| | 3 | 6.21 | 2.64 | 0.04 | 0.68 | 1.88 | 0.33 | 0.12 | 0.42 | 0.009 | - | 0.4 | 51 | 16 | 13 | 3.1 | 5.0 | 0.11 |
| | 4 | 6.50 | 2.77 | 0.04 | 0.73 | 1.87 | 0.36 | 0.13 | - | 0.008 | - | 0.4 | 51 | 16 | 13 | 3.2 | 5.1 | 0.11 |
| | 5 | 6.51 | 2.77 | 0.04 | 0.73 | 1.87 | 0.36 | 0.13 | - | 0.009 | - | 0.4 | 50 | 16 | 14 | 3.2 | 5.2 | 0.10 |
| | 6 | 6.28 | 2.66 | 0.04 | 0.70 | 1.88 | 0.34 | 0.13 | - | 0.009 | - | 0.4 | 51 | 16 | 13 | 3.1 | 5.1 | 0.11 |
| | 7 | 6.65 | 2.29 | 0.04 | 0.70 | 2.24 | 0.34 | 0.13 | - | 0.009 | - | 0.4 | 51 | 16 | 13 | 3.1 | 5.1 | 0.11 |
| | 8 | 7.12 | 2.07 | 0.05 | 0.73 | 2.55 | 0.36 | 0.13 | - | 0.009 | - | 0.4 | 51 | 16 | 13 | 3.1 | 5.0 | 0.11 |
| | 9 | 6.15 | 2.62 | 0.04 | 0.70 | 1.87 | 0.34 | 0.13 | 0.12 | 0.009 | - | 0.4 | 51 | 16 | 13 | 3.1 | 5.1 | 0.11 |
| | 10 | 6.03 | 2.56 | 0.04 | 0.66 | 1.88 | 0.34 | 0.13 | 0.35 | 0.009 | - | 0.4 | 51 | 16 | 13 | 3.1 | 5.1 | 0.11 |
| | 11 | 5.60 | 1.91 | 0.04 | 0.58 | 2.26 | 0.28 | 0.10 | - | 0.008 | - | 0.4 | 52 | 16 | 14 | 3.2 | 5.2 | 0.10 |
| | 12 | 6.28 | 2.66 | 0.04 | 0.70 | 1.88 | 0.34 | 0.13 | - | 0.009 | - | 0.4 | 52 | 16 | 13 | 2.5 | 4.9 | 0.11 |
| | 13 | 5.95 | 2.51 | 0.04 | 0.67 | 1.88 | 0.32 | 0.12 | - | 0.008 | - | 0.4 | 52 | 16 | 13 | 3.1 | 5.0 | 0.11 |
| | 14 | 8.44 | 0.66 | 1.20 | 0.10 | 12.63 | 0.28 | 0.10 | - | 0.009 | - | 0.8 | 50 | 16 | 14 | 3.0 | 5.1 | 0.11 |
| | 15 | 7.20 | 1.23 | 1.53 | 0.14 | 6.37 | 0.37 | 0.10 | - | 0.009 | - | 0.8 | 51 | 14 | 14 | 2.7 | 5.4 | 0.11 |
| | 16 | 8.13 | 0.80 | 1.21 | 0.10 | 10.31 | 0.28 | 0.10 | - | 0.009 | - | 0.8 | 50 | 16 | 14 | 2.8 | 5.0 | 0.11 |
| | 17 | 7.06 | 1.21 | 1.51 | 0.36 | 5.47 | 0.32 | 0.04 | - | 0.009 | - | 0.4 | 50 | 16 | 14 | 2.8 | 5.3 | 0.11 |
| | 18 | 6.96 | 1.17 | 1.91 | 0.13 | 6.80 | 0.32 | 0.04 | - | 0.009 | - | 0.4 | 50 | 16 | 14 | 2.8 | 5.3 | 0.11 |
| | 19 | 7.20 | 0.84 | 0.71 | 0.14 | 8.08 | 0.33 | 0.04 | - | 0.009 | - | 0.4 | 51 | 15 | 14 | 2.7 | 5.4 | 0.11 |

**[Table 2]**

| | Wire No. | Content (mass%) of components contained in flux in wire | | | | | | | | | | Content (mass%) of components in wire | | | | | | |
|---|---|---|---|---|---|---|---|---|---|---|---|---|---|---|---|---|---|---|
| | | TiO₂ | Content in terms of SiO₂ | Content in terms of ZrO₂ | Al₂O₃ | ([TiO₂] + [ZrO₂])/([SiO₂] + [Al₂O₃]) | [Na] + [K] + in [Li] | Content terms of F | MnO₂ | Content in terms of B | Bi₂O₃ | Mn Ni | | Cr | Mo | W | Fe | Ti |
| Comparative Example | 20 | 7.09 | 3.02 | 0.05 | 0.80 | 1.87 | 0.39 | 0.15 | - | 0.011 | - | 0.4 | 50 | 16 | 13 | 3.1 | 5.0 | 0.11 |
| | 21 | 7.43 | 1.62 | 0.04 | 0.31 | 3.87 | 0.63 | 0.20 | - | - | 0.076 | 0.8 | 51 | 15 | 14 | 2.9 | 4.9 | 0.12 |
| | 22 | 7.43 | 1.62 | 0.04 | 0.31 | 3.87 | 0.63 | 0.20 | - | - | 0.076 | 3.5 | 55 | 6 | 16 | 2.3 | 6.2 | - |
| | 23 | 5.32 | 2.24 | 0.03 | 0.60 | 1.88 | 0.29 | 0.11 | - | 0.008 | - | 0.4 | 53 | 16 | 13 | 3.1 | 5.0 | 0.11 |
| | 24 | 6.49 | 0.78 | 2.09 | 0.03 | 10.58 | 0.65 | 0.41 | 0.63 | - | - | 0.7 | 50 | 15 | 14 | 3.0 | 5.1 | 0.10 |
| | 25 | 6.50 | 0.40 | 2.11 | 0.03 | 20.38 | 0.54 | 0.23 | - | - | - | 0.8 | 51 | 15 | 14 | 2.9 | 5.5 | 0.11 |
| | 26 | 7.31 | 0.42 | 2.18 | 0.03 | 21.36 | 0.55 | 0.24 | - | - | - | 0.8 | 51 | 15 | 14 | 2.8 | 5.2 | 0.11 |
| | 27 | 6.62 | 0.39 | 2.07 | 0.03 | 21.01 | 0.67 | 0.35 | - | - | - | 0.8 | 51 | 14 | 14 | 2.7 | 5.4 | 0.11 |
| | 28 | 7.81 | 0.46 | 2.45 | 0.03 | 21.10 | 0.78 | 0.41 | - | - | - | 0.8 | 50 | 14 | 14 | 2.7 | 5.4 | 0.11 |
| | 29 | 7.20 | 1.23 | 1.53 | 0.14 | 6.37 | 0.37 | 0.10 | 1.11 | 0.009 | - | 0.4 | 49 | 16 | 14 | 2.8 | 5.1 | - |
| | 30 | 7.66 | 0.60 | 1.07 | 0.10 | 12.63 | 0.25 | 0.08 | 0.88 | 0.008 | - | 0.4 | 51 | 16 | 13 | 3.1 | 5.0 | 0.11 |
| | 31 | 9.94 | 0.57 | 2.97 | 0.04 | 21.28 | 0.75 | 0.33 | - | - | - | 0.8 | 47 | 14 | 14 | 2.7 | 5.4 | 0.11 |
| | 32 | 7.31 | 0.85 | 3.09 | 0.03 | 11.85 | 0.55 | 0.24 | - | - | - | 0.8 | 50 | 14 | 14 | 2.7 | 5.4 | 0.11 |
| | 33 | 7.31 | 0.85 | 3.09 | 0.03 | 11.81 | 0.63 | 0.30 | 0.49 | - | - | 0.8 | 49 | 14 | 14 | 2.7 | 5.4 | 0.11 |
| | 34 | 10.08 | 0.68 | 1.39 | 0.11 | 14.58 | 0.31 | 0.12 | - | 0.009 | - | 0.4 | 49 | 16 | 13 | 3.1 | 5.0 | 0.11 |
| | 35 | 8.92 | 0.32 | 1.07 | 0.04 | 27.55 | 0.26 | 0.10 | - | 0.009 | - | 0.4 | 50 | 16 | 13 | 3.1 | 5.1 | 0.11 |

### [Evaluation of flux-cored wire]

Next, the produced flux-cored wires of Nos.1 to 35 were used to perform a test for assessing vertical welding workability, a test for evaluating hot cracking resistance, and tests for evaluating slag seizure, weld bead surface pit, and arc stability. In each test, an SM490 steel plate was used as a base metal to be welded. The component content of the SM490 steel plate (base metal) used is shown in Table 3 below.

**[Table 3]**

| Component content (mass%) of base metal | | | | | |
|---|---|---|---|---|---|
| C | Si | Mn | P | S | Fe |
| 0.12 | 0.28 | 1.35 | 0.009 | 0.001 | balance |

### <Vertical welding workability >

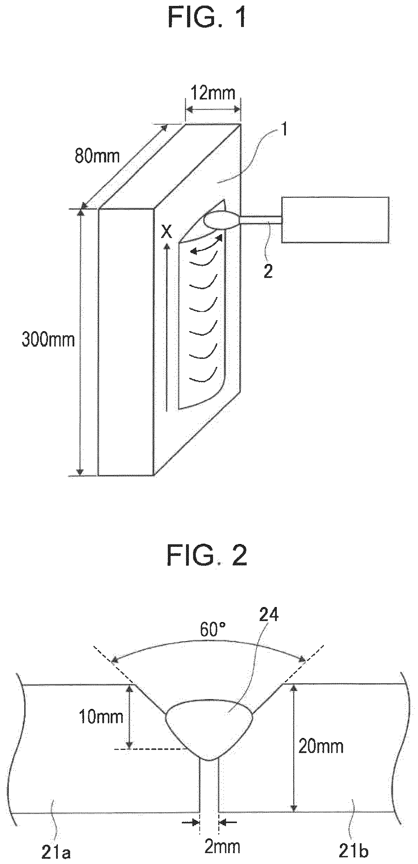

Fig. 1 is a schematic view showing a welding method for evaluating vertical welding workability. As shown in Fig. 1, a steel plate 1 having a width of 80 mm, a length of 300 mm, and a thickness of 12 mm was placed upright, and using a flux-cored wire 2 produced above, gas shielded arc welding was performed on a surface in a direction indicated by an arrow X (upward) along the longitudinal direction of the steel plate 1. The welding conditions are shown in Table 4 below.

The evaluation criteria for vertical welding workability were as follows: when welding was carried out without any problem, it was rated as ⊙, and when it was possible to carry out welding but a molten pool solidified in a slightly sagged state, it was rated as ○, both of which were evaluated as acceptable. When a molten pool partially sagged and it was difficult to carry out welding, it was rated as × and evaluated as unacceptable.

**[Table 4]**

| | |
|---|---|
| Process | Semiautomatic |
| Welding position | Vertical upward |
| Polarity | DC-EP |
| Wire size | 1.2 mm |
| Type and flow rate of shielding gas | 100% CO₂, 25 liters/min |
| Welding current | 140-160 A |
| Welding voltage | 24-26 V |
| Contact tip distance | 10-15 mm |
| Weld length | 250 mm |
| Way of layering | 1 layer, 1 pass |
| Weaving width | 10-15 mm |
| Base metal dimension | Shown in Fig. 1 |

### <Hot cracking resistance>

Fig. 2 is a schematic view showing welding conditions for evaluating hot cracking resistance. As shown in Fig. 2, two steel plates 21a and 21b each having a thickness of 20 mm and a length of 300 mm were machined at their longitudinal ends to form bevels, and the steel plates were butted against each other with a root gap of 2 mm to form a Y-groove. The groove angle was 60°, and the depth of the groove was 10 mm. After this, the interior of the groove was welded using a traveling carriage in accordance with a C-type jig restraint butt weld cracking test method in JIS Z3155 (Method of FISCO test). After 10 minutes from the end of welding, the sample was removed from the jig, and cracking of a weld metal 24 was observed by a liquid penetrant test. Furthermore, to check cracks present inside, the bead surface was step-cut by 2 mm, and another liquid penetrant test was then performed. Welding conditions in the evaluation of hot cracking resistance are shown in Table 5 below.

The evaluation criteria for hot cracking resistance were as follows: when no cracks were observed throughout a steady portion excluding a crater portion, it was rated as ○ (acceptable), and when an indication pattern (crack), including a partial one, was observed in a steady portion excluding a crater portion, it was rated as × (unacceptable).

**[Table 5]**

| | |
|---|---|
| Process | Automatic (traveling carriage used) |
| Welding position | Flat |
| Polarity | DC-EP |
| Wire size | 1.2 mm |
| Type and flow rate of shielding gas | 100% CO₂, 25 liters/min |
| Welding current | 240 A |
| Welding voltage | 30 V |
| Welding speed | 45 cm/min |
| Contact tip distance | 20 mm |
| Weld length | 250 mm |
| Way of layering | 1 layer, 1 pass |
| Base metal dimension | Shown in Fig. 2 |

### <Slag seizure>

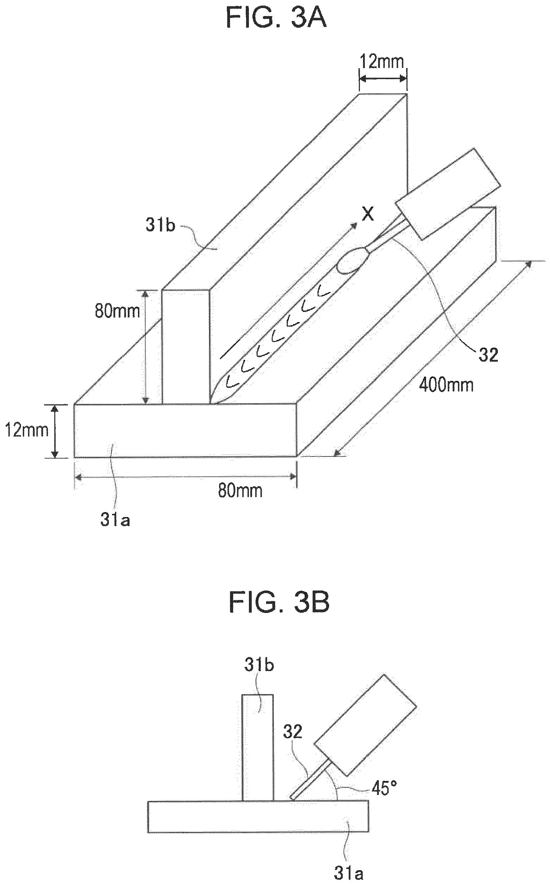

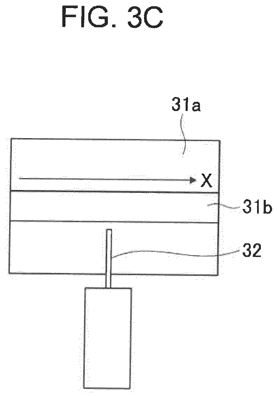

Fig. 3A to Fig. 3C are schematic views showing a welding method for evaluating slag seizure. As shown in Fig. 3A, two steel plates 31a and 31b each having a width of 80 mm, a length of 400 mm, and a thickness of 12 mm were provided; the steel plate 31b was placed sideways on the steel plate 31a placed horizontally; and using a flux-cored wire 32 produced above, gas shielded arc welding was performed along a corner portion formed between the steel plate 31a and the steel plate 31b in a direction indicated by an arrow X. As shown in Fig. 3B and Fig. 3C, fillet welding was performed with an angle (torch angle) between the steel plate 31a placed horizontally and the wire 32 inclined at 45° and while keeping the wire 32 at forehand and backhand angles of 0°. Welding conditions for the fillet welding are shown in Table 6 below.

The evaluation criteria for slag seizure were as follows: when slag was removed when struck with a chipper four to five times, it was rated as ○ (acceptable), and when slag was not removed despite being struck with a chipper or when slag was not removed until it was struck considerable times, it was rated as × (unacceptable).

**[Table 6]**

| | |
|---|---|
| Process | Automatic (traveling carriage used) |
| Welding position | Flat horizontal |
| Polarity | DC-EP |
| Wire size | 1.2 mm |
| Type and flow rate of shielding gas | 100% CO₂, 25 liters/min |
| Welding current | 220-240 A |
| Welding voltage | 30 V |
| Welding speed | 40 cm/min |
| Contact tip distance | 15 mm |
| Torch angle | 45° |
| Forehand and backhand angles | 0° |
| Weld length | 350 mm |
| Way of layering | 1 layer, 1 pass |
| Base metal dimension | Shown in Fig. 3 |

### <Weld bead surface pit>

Horizontal fillet welding was performed by the above welding method used in the evaluation of slag seizure under the same welding conditions as shown in Table 6 above, and weld bead surface pit in a 300-mm steady portion was observed.

The evaluation criteria for weld bead surface pit were as follows: when the number of pits having a diameter of 1.0 mm or more was two or less, it was rated as ○ (acceptable), and when three or more pits having a diameter of 1.0 mm or more were observed, it was rated as × (unacceptable).

### <Arc stability>

Horizontal fillet welding was performed by the above welding method used in the evaluation of slag seizure under the same welding conditions as shown in Table 6 above, and arc stability was evaluated.

The evaluation criteria for arc stability were as follows: when an arc was stable during the entire welding, it was rated as ○ (acceptable), and when an arc had no practical problems but was somewhat poor, it was rated as Δ (acceptable).

The results of the evaluations of vertical welding workability, hot cracking resistance, slag seizure, weld bead surface pit, and arc stability described above are shown in Table 7 below.

**[Table 7]**

| | Wire No. | Evaluation results | | | | |
|---|---|---|---|---|---|---|
| | | Vertical welding workability | Hot cracking resistance | Slag seizure | Weld bead surface pit | Arc stability |
| Inventive Example | 1 | ⊙ | ○ | ○ | ○ | ○ |
| | 2 | ⊙ | ○ | ○ | ○ | ○ |
| | 3 | ⊙ | ○ | ○ | ○ | ○ |
| | 4 | ⊙ | ○ | ○ | ○ | ○ |
| | 5 | ⊙ | ○ | ○ | ○ | ○ |
| | 6 | ⊙ | ○ | ○ | ○ | ○ |
| | 7 | ⊙ | ○ | ○ | ○ | ○ |
| | 8 | ⊙ | ○ | ○ | ○ | ○ |
| | 9 | ⊙ | ○ | ○ | ○ | ○ |
| | 10 | ⊙ | ○ | ○ | ○ | ○ |
| | 11 | ○ | ○ | ○ | ○ | ○ |
| | 12 | ⊙ | ○ | ○ | ○ | ○ |
| | 13 | ○ | ○ | ○ | ○ | ○ |
| | 14 | ○ | ○ | ○ | ○ | ○ |
| | 15 | ○ | ○ | ○ | ○ | ○ |
| | 16 | ○ | ○ | ○ | ○ | ○ |
| | 17 | ○ | ○ | ○ | ○ | Δ |
| | 18 | ○ | ○ | ○ | ○ | Δ |
| | 19 | ○ | ○ | ○ | ○ | Δ |
| Comparative Example | 20 | ⊙ | ○ | × | ○ | ○ |
| | 21 | ○ | × | ○ | ○ | ○ |
| | 22 | ○ | × | ○ | ○ | ○ |
| | 23 | × | ○ | ○ | ○ | ○ |
| | 24 | × | ○ | ○ | ○ | ○ |
| | 25 | × | ○ | ○ | ○ | ○ |
| | 26 | × | ○ | ○ | ○ | ○ |
| | 27 | × | ○ | ○ | ○ | ○ |
| | 28 | × | ○ | ○ | ○ | Δ |
| | 29 | × | ○ | ○ | ○ | ○ |
| | 30 | × | ○ | ○ | ○ | ○ |
| | 31 | × | ○ | ○ | × | Δ |
| | 32 | × | ○ | ○ | × | ○ |
| | 33 | × | ○ | ○ | × | ○ |
| | 34 | × | ○ | ○ | × | ○ |
| | 35 | × | ○ | ○ | × | ○ |

In Table 7 above, wire Nos. 1 to 19 are Inventive Examples, and wire Nos. 20 to 35 are Comparative Examples. As shown in Tables 1, 2, and 7 above, wire Nos.1 to 19 of Inventive Examples contained components within the ranges of the present invention and thus were evaluated as acceptable in all of vertical welding workability, hot cracking resistance, slag seizure, weld bead surface pit, and arc stability. In particular, wire Nos. 1 to 16 had higher arc stability because the metal fluoride content (in terms of F) was within the preferred range of the present invention.

By contrast, wire No. 23 of Comparative Example had poor vertical welding workability because the TiO₂ content was below the lower limit of the range of the present invention.

Wire Nos. 27 and 35 had poor vertical welding workability because the SiO₂ content was below the lower limit of the range of the present invention.

Wire Nos. 24, 25, 26, 27, 28, 31, 32, 33, and 35 had poor vertical welding workability because the Al₂O₃ content was below the lower limit of the range of the present invention.

Wire Nos. 29 and 30 had poor vertical welding workability because the MnO₂ content was above the upper limit of the range of the present invention.

Wire Nos. 21 and 22 caused hot cracking because the Bi₂O₃ content exceeded the upper limit of the range of the present invention.

Wire No. 20 had poor slag seizure properties because the SiO₂ content exceeded the upper limit of the range of the present invention.

Wire No. 34 had poor vertical welding workability and caused pits on a bead surface because the TiO₂ content exceeded the upper limit of the range of the present invention.

Wire No. 35 caused pits on a bead surface because the value of {([TiO₂] + [ZrO₂])/([SiO₂] + [Al₂O₃])) exceeded the upper limit of the range of the present invention.

Wire Nos. 31, 32, and 33 caused pits on a bead surface because the ZrO₂ content exceeded the upper limit of the range of the present invention.

As described above in detail, according to the present invention, a Ni-based alloy flux-cored wire that has good welding workability in a vertical position even in a 100% CO₂ shielding gas atmosphere, that can reduce the occurrence of slag seizure and bead surface pit, and that can provide a weld metal having high arc stability and high hot cracking resistance can be obtained by controlling a flux composition within a specific range.

While various embodiments have been described above with reference to the drawings, it should be understood that the present invention is not limited to these examples. It is apparent that a person skilled in the art can conceive various changes or modifications within the scope set forth in the claims, and it is understood that such changes or modifications also fall within the technical scope of the present invention, as a matter of course. The constituent elements in the embodiments described above may be freely combined without departing from the spirit of the present invention.

This application is based on Japanese Patent Application (No. 2020-034276) filed on February 28, 2020, the contents of which are incorporated herein by reference.

## Claims

1. A Ni-based alloy flux-cored wire comprising a sheath filled with a flux, the sheath being formed of a Ni-based alloy, wherein
the wire contains, relative to a total mass of the wire,
Mn: 0.1 mass% or more and 5 mass% or less,
Ni: 40 mass% or more and 60 mass% or less,
Cr: 5 mass% or more and 20 mass% or less,
Mo: 10 mass% or more and 20 mass% or less,
W: 2.0 mass% or more and 4.0 mass% or less, and
Fe: 3.0 mass% or more and 7.0 mass% or less,
the flux contains, relative to the total mass of the wire,
TiO₂: 5.40 mass% or more and 10.00 mass% or less,
metallic Si and Si oxide in terms of SiO₂: 0.40 mass% or more and 3.00 mass% or less,
metallic Zr and Zr oxide in terms of ZrO₂: 2.70 mass% or less, and
Al₂O₃: 0.05 mass% or more and 1.20 mass% or less, and
MnO₂: less than 0.80 mass%,
Bi₂O₃: 0.01 mass% or less, and
([TiO₂] + [ZrO₂])/([SiO₂] + [Al₂O₃]): 25.00 or less,
where [TiO₂] is a content of TiO₂, [SiO₂] is a content in terms of SiO₂, [ZrO₂] is a content in terms of ZrO₂, and [Al₂O₃] is a content of Al₂O₃, are satisfied.

2. The Ni-based alloy flux-cored wire according to claim 1, wherein
the flux further contains at least one selected from Na, K, and Li, and
[Na] + [K] + [Li]: 0.10 mass% or more and 0.70 mass% or less,
where [Na], [K], and [Li] are a content of Na, a content of K, and a content of Li, respectively, relative to the total mass of the wire, is satisfied.

3. The Ni-based alloy flux-cored wire according to claim 1 or 2, wherein
the flux further contains, relative to the total mass of the wire,
metal fluoride in terms of F: 0.05 mass% or more and 0.50 mass% or less, and
metallic B and B compound in terms of B: 0.030 mass% or less, is satisfied.

4. The Ni-based alloy flux-cored wire according to claim 1 or 2, wherein
relative to the total mass of the wire,
Ti: 0.50 mass% or less, is further satisfied.

5. The Ni-based alloy flux-cored wire according to claim 3, wherein
relative to the total mass of the wire,
Ti: 0.50 mass% or less, is further satisfied.
